# EUROPÄISCHE PATENTANMELDUNG

(11) **EP 1 923 281 A2**
(43) Veröffentlichungstag der Anmeldung: **21.05.2008**
(21) Anmeldenummer: 07450198.2
(22) Anmeldetag: 15.11.2007
(51) Int. Cl.: B60S 5/06

(54) **Vorrichtung zur Entgegennahme, zum Aufladen und zur Ausgabe von Akkumulatoren und Verfahren zu deren Betrieb und Verwendung**

(30) Priorität: 15.11.2006 AT 18882006
(71) Anmelder: Andexlinger, Erich, 4614 Marchtrenk (AT)
(72) Erfinder: Andexlinger, Erich, 4614 Marchtrenk (AT)
(74) Vertreter: Margotti, Herwig Franz

(57) **Zusammenfassung**

Eine Vorrichtung zur Entgegennahme, zum Aufladen und zur Ausgabe von Akkumulatoren (2), insbesondere von Akkumulatoren (2) zum Betrieb von Elektrofahrzeugen, umfasst einen Behälter (1) mit zumindest einer Eingabeöffnung (8), zumindest einer Ausgabeöffnung (9) und mit einem Lagerbereich (4), wobei in dem Behälter (1) zumindest eine die zumindest eine Eingabeöffnung (8), den Lagerbereich (4) und die zumindest eine Ausgabeöffnung (9) verbindende Transportvorrichtung (3, 5) vorgesehen ist, wobei weiterhin in dem Behälter (1) zumindest eine Ladevorrichtung (6) vorgesehen ist, an welche ein oder mehrere in die Vorrichtung eingeführte Akkumulatoren (2) anschließbar sind, und wobei an dem Behälter (1) eine Bezahlvorrichtung (7) angeordnet ist.

## Beschreibung

Die Erfindung betrifft eine Vorrichtung zur Entgegennahme, zum Aufladen und zur Ausgabe von Akkumulatoren, insbesondere von Akkumulatoren zum Betrieb von Elektrofahrzeugen, sowie Verfahren zum Betrieb und zur Verwendung einer derartigen Vorrichtung.

Elektrisch betriebene Fahrzeuge finden aufgrund ihrer umweltfreundlichen Betriebsweise immer mehr Anklang sowohl bei Privatpersonen als auch bei Firmen und öffentlichen Einrichtungen wie im Personennahverkehr.

Der Nachteil an derzeit gängigen elektrisch betriebenen Fahrzeugen liegt dabei vor allem in der Tatsache begründet, dass die Fahrzeuge nur eine begrenzte Reichweite haben und dann an eine Ladestation zurückkehren müssen. Da diese gewöhnlich in der heimischen Garage installiert ist und keine andere Ladestation an anderen Punkten zur Verfügung steht, ist der Aktionsradius auf einen kleinen Umkreis um die Ladestation des jeweiligen Fahrzeugs begrenzt.

Ein weiterer Nachteil gängiger Fahrzeuge liegt in der langen Ladedauer der in diesen Fahrzeugen verbauten Akkumulatoren. Es ist gewöhnlich nicht ausreichend, so große Akkumulatoren in kurzer Zeit so weit aufzuladen, dass eine Weiterfahrt möglich ist. Das Fahrzeug muss beispielsweise über Nacht an der Ladestation angeschlossen bleiben, um am nächsten Morgen wieder zur Verfügung zu stehen.

Es ist demnach Aufgabe der Erfindung, eine Vorrichtung zur Verfügung zu stellen, welche die genannten Nachteile vermeidet und das einfache und schnelle Aufladen von Akkumulatoren an beliebigen Standorten zu ermöglichen.

Die Aufgabe wird durch eine erfindungsgemäße Vorrichtung sowie durch ein erfindungsgemäßes Verfahren zum Betrieb und zur Verwendung einer solchen Vorrichtung gelöst.

Dabei ist vorgesehen, dass die Vorrichtung mit einem Behälter mit zumindest einer Eingabeöffnung, zumindest einer Ausgabeöffnung und einem Lagerbereich ausgestattet ist, wobei in dem Behälter zumindest eine die zumindest eine Eingabeöffnung, den Lagerbereich und die zumindest eine Ausgabeöffnung verbindende Transportvorrichtung vorgesehen ist, wobei weiterhin in dem Behälter zumindest eine Ladevorrichtung vorgesehen ist, an welche ein oder mehrere in die Vorrichtung eingeführte Akkumulatoren anschließbar sind, und wobei an dem Behälter eine Bezahlvorrichtung angeordnet ist.

Vorteilhafterweise ist es dadurch möglich, einen leeren Akkumulator eines Fahrzeugs aus diesem zu entnehmen und innerhalb weniger Minuten wieder ein fahrbereites Fahrzeug zur Verfügung zu haben, da der eingegebene Akkumulator nicht erst aufgeladen und dann wieder ausgegeben, sondern durch einen vollen Akkumulator, der in der Vorrichtung bevorratet wird, ersetzt wird.

Dies ermöglicht neben der schnellen Wiederverfügbarkeit auch einen großen Aktionsradius für elektrisch betriebene Fahrzeuge, da die Vorrichtungen an beliebigen Punkten wie beispielsweise Tankstellen aufgestellt werden können.

Weitere vorteilhafte Ausgestaltungsvarianten und Weiterbildungen der Erfindung gehen aus den Unteransprüchen hervor.

Vorteilhafterweise ist die Ladevorrichtung, in welcher die eingegebenen Akkumulatoren neu aufgeladen werden, in oder nahe bei dem Lagerbereich angeordnet, da dadurch kompakte Ausmaße der Vorrichtung erzielt werden können.

Zwischen der zumindest einen Eingabeöffnung und dem Lagerbereich kann eine erste Transportvorrichtung ausgebildet sein, durch welche die eingegebenen Akkumulatoren in einfacher Weise in den Lager- und Ladebereich transportiert werden können.

In ähnlicher Weise kann zwischen dem Lagerbereich und der zumindest einen Ausgabeöffnung eine zweite Transportvorrichtung vorgesehen sein, die einen Akkumulator zu der Ausgabeöffnung transportiert.

Ein Manipulator wie beispielsweise ein Kran oder eine hydraulische Hebevorrichtung, welche optional an der Vorrichtung angeordnet sein kann, vereinfacht die Handhabung der Akkumulatoren beträchtlich und steigert dadurch die Akzeptanz von elektrisch betriebenen Fahrzeugen beim Benutzer.

Ein bevorzugtes Ausführungsbeispiel einer erfindungsgemäß ausgestalteten Vorrichtung wird unter Bezugnahme auf die Zeichnungen im Folgenden näher beschrieben. In der Zeichnung zeigt:

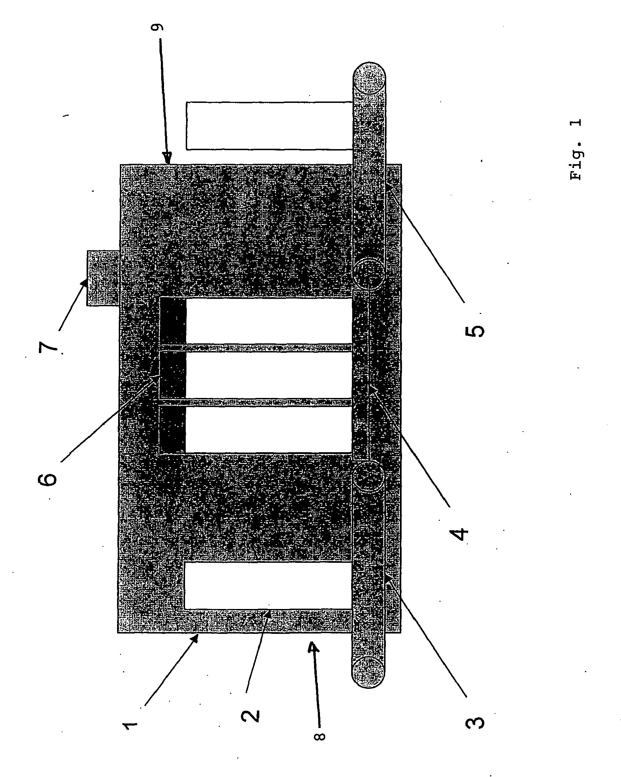

- Fig. 1: eine stark schematisierte Darstellung eines bevorzugten Ausführungsbeispiels einer erfindungsgemäß ausgestalteten Vorrichtung zur Entgegennahme, zum Aufladen und zur Ausgabe von Akkumulatoren.

In Fig. 1 ist in einer stark schematisierten seitlichen Ansicht ein bevorzugtes Ausführungsbeispiel einer erfindungsgemäß ausgestalteten Vorrichtung zur Entgegennahme, Aufladung und Ausgabe von Akkumulatoren, insbesondere von Akkumulatoren für Elektrofahrzeuge wie Elektro-Personenkraftwagen, Elektro-Zweiräder, Gabelstapler, Flughafenfahrzeuge etc. dargestellt.

Die Vorrichtung umfasst im Wesentlichen einen Behälter 1, der zumindest eine Eingabeöffnung 8, in welche ein Akkumulator 2 eingegeben werden kann, und zumindest eine Ausgabeöffnung 9, aus welcher ein Akkumulator 2 entnommen werden kann, aufweist. Wenn die Vorrichtung zur Handhabung einer großen Anzahl von Akkumulatoren 2 vorgesehen ist, können jeweils auch mehrere Ein- bzw. Ausgabeöffnungen 8, 9 vorgesehen sein.

An die zumindest eine Eingabeöffnung 8 ist im dargestellten Ausführungsbeispiel eine erste Transportvorrichtung 3 angeschlossen, welche einen eingegebenen Akkumulator 2 in einen Lagerbereich 4 transportiert. Der Lagerbereich 4 kann dabei so ausgestaltet sein, dass eine große Menge Akkumulatoren 2 ausgabebereit gelagert werden können. Eine oder mehrere Ladevorrichtungen 6 können in der Nähe des Lagerbereiches 4 oder auch in diesem angeordnet sein.

Wird ein Akkumulator 2 zum Austausch angefordert, wird dieser aus dem Lagerbereich 4 über eine zweite Transportvorrichtung 5, welche den Lagerbereich 4 mit der zumindest einen Ausgabeöffnung 9 des Behälters 1 verbindet, zu dieser transportiert und kann dort entnommen werden.

Die Transportvorrichtungen 3 und 5 können dabei in bekannter Weise in Form von Laufbändern oder Fließbändern oder anderen geeigneten Vorrichtungen ausgebildet sein. Ferner ist es denkbar, die beiden Transportvorrichtungen 3 und 5 als eine zusammenhängende Transportvorrichtung auszubilden, die sich zwischen der Ein- und der Ausgabeöffnung 8, 9 erstreckt. Dies kann beispielsweise bei kurzen Bauformen der Vorrichtung von Vorteil sein, wenn die Ein- und Ausgabeöffnung an der gleichen Seite des Behälters 1 vorgesehen sind und die Transportvorrichtung beispielsweise als Kreisförderer ausgebildet ist.

An dem Behälter 1 oder auch entfernt von diesem kann eine Bezahlvorrichtung 7 angeordnet sein, welche mit einer nicht weiter dargestellten Steuereinheit der Vorrichtung kommuniziert.

Im Folgenden wird die Verwendung bzw. der Betrieb der Vorrichtung am Beispiel einer Ladestation für Elektrofahrzeuge, die an einer Tankstelle aufgestellt ist, erläutert.

Tankstellen sind weit verbreitet und bieten inzwischen eine Infrastruktur, welche über die Betankung von Fahrzeugen hinausgeht. Es ist somit denkbar, an einer Tankstelle auch eine erfindungsgemäß ausgestaltete Vorrichtung bereitzustellen, welche die "Betankung" von Elektrofahrzeugen ermöglicht.

Besteht in einem Elektrofahrzeug ein Bedarf an Nachladung eines oder mehrerer Akkumulatoren, so steuert der Fahrer eine mit einer erfindungsgemäßen Vorrichtung ausgestattete Tankstelle an, entnimmt dem Fahrzeug den oder die zu ladenden Akkumulatoren 2 aus dem Fahrzeug und gibt diese in die Eingabeöffnung 8 des Behälters 1 ein. Dann steckt er eine Bezahlkarte, beispielsweise eine Kreditkarte oder eine speziell konzipierte Ladekarte, in die Bezahlvorrichtung 7 ein. Die entgegengenommenen Akkumulatoren 2 werden durch die erste Transportvorrichtung 3 in den Lagerbereich 4 bewegt und dort an die zumindest eine Ladevorrichtung 6 angeschlossen. Das Steuergerät misst die Restladung der Akkumulatoren 2 und berechnet daraus den Preis für eine gleiche Anzahl voller Akkumulatoren 2.

Da das Aufladen großer Akkumulatoren 2 erfahrungsgemäß lange dauert, wird erfindungsgemäß zur Vermeidung von Wartezeiten eine gleiche Anzahl Akkumulatoren 2, welche geladen und ausgabebereit im Lagerbereich 4 bevorratet werden, an den Kunden ausgegeben. Die Akkumulatoren 2 werden zu diesem Zweck bei Anforderung durch das Steuergerät nach der Detektion der Anzahl aus dem Lagerbereich 4 über die zweite Transportvorrichtung 5 zur Ausgabeöffnung 9 transportiert, wo sie durch den Kunden entnommen und in das Fahrzeug eingesetzt werden können. Nach dem Abbuchen des errechneten Betrages entnimmt der Kunde die Bezahlkarte und kann die Tankstelle verlassen, ohne sich um die Neuladung der von ihm eingegebenen Akkumulatoren 2 kümmern zu müssen. Der Tausch leerer Akkumulatoren 2 ist somit innerhalb weniger Minuten vollziehbar, was eine hohe Zeitersparnis bedeutet. Durch die kompakte Bauform der Vorrichtung ist es zudem möglich, diese an beliebigen Orten aufzustellen und dadurch die Reichweite von Elektrofahrzeugen signifikant zu erhöhen.

Eine weitere vorteilhafte Ausführungsform der erfindungsgemäß ausgestalteten Vorrichtung kann einen Manipulator wie beispielsweise einen an sich bekannten Kran, einen Hydraulikarm o.ä. umfassen, mit welchem die Akkumulatoren 2 bequem vom Fahrzeug zur Vorrichtung und zurück bewegt werden bzw. aus dem Fahrzeug entnommen und wieder eingesetzt und aus der Vorrichtung entnommen und eingegeben werden können. Auf diese Weise sind auch größere und entsprechend schwere Akkumulatoren 2 in einfacher Weise handhabbar. Entsprechende Manipulatoren erleichtern somit die Handhabung weiter, was die Akzeptanz durch den Benutzer weiter erhöht.

## Patentansprüche

1. Vorrichtung zur Entgegennahme, zum Aufladen und zur Ausgabe von Akkumulatoren (2), insbesondere von Akkumulatoren (2) zum Betrieb von Elektrofahrzeugen, umfassend
- einen Behälter (1)
- mit zumindest einer Eingabeöffnung (8),
- mit zumindest einer Ausgabeöffnung (9)
- und mit einem Lagerbereich (4),
- wobei in dem Behälter (1) zumindest eine die zumindest eine Eingabeöffnung (8), den Lagerbereich (4) und die zumindest eine Ausgabeöffnung (9) verbindende Transportvorrichtung (3; 5) vorgesehen ist,
- wobei weiterhin in dem Behälter (1) zumindest eine Ladevorrichtung (6) vorgesehen ist, an welche ein oder mehrere in die Vorrichtung eingeführte Akkumulatoren (2) anschließbar sind,
**dadurch gekennzeichnet, dass**
- zwischen der zumindest einen Eingabeöffnung (8) und dem Lagerbereich (4) eine erste Transportvorrichtung (3) und
- zwischen dem Lagerbereich (4) und der zumindest einen Ausgabeöffnung (9) eine zweite Transportvorrichtung (5) ausgebildet ist und
- dass an dem Behälter (1) eine Bezahlvorrichtung (7) angeordnet ist.

2. Vorrichtung nach Anspruch 1, **dadurch gekennzeichnet, dass** die Ladevorrichtung (6) in oder nahe bei dem Lagerbereich (4) angeordnet ist.

3. Vorrichtung nach Anspruch 1 oder 2, **dadurch gekennzeichnet, dass** an der Vorrichtung ein Manipulator, insbesondere ein Kran oder eine hydraulische Hebevorrichtung, vorgesehen ist.

4. Verfahren zur Verwendung einer Vorrichtung zur Entgegennahme, zum Aufladen und zur Ausgabe von Akkumulatoren (2), insbesondere von Akkumulatoren (2) zum Betrieb von Elektrofahrzeugen, wobei die Vorrichtung umfasst:
- einen Behälter (1)
- mit zumindest einer Eingabeöffnung (8),
- mit zumindest einer Ausgabeöffnung (9)
- und mit einem Lagerbereich (4),
- wobei in dem Behälter zumindest eine die zumindest eine Eingabeöffnung (8), den Lagerbereich (4) und die zumindest eine Ausgabeöffnung (9) verbindende Transportvorrichtung (3; 5) vorgesehen ist,
- wobei weiterhin in dem Behälter (1) zumindest eine Ladevorrichtung (6) vorgesehen ist, an welche ein oder mehrere in die Vorrichtung eingeführte Akkumulatoren (2) anschließbar sind, und
- wobei an dem Behälter (1) eine Bezahlvorrichtung (7) angeordnet ist,
**dadurch gekennzeichnet, dass** das Verfahren für den Fahrer eines Elektrofahrzeugs die folgenden Verfahrensschritte umfasst:
- Entnahme zumindest eines Akkumulators (2) aus dem Elektrofahrzeug,
- Eingabe einer Bezahlkarte in die Bezahlvorrichtung (7),
- Eingabe des zumindest einen Akkumulators (2) in eine der Eingabeöffnungen (8) der Vorrichtung,
- Entnahme zumindest eines Akkumulators (2) aus einer der Ausgabeöffnungen (9) der Vorrichtung,
- Einsetzen des zumindest einen Akkumulators (2) in das Elektrofahrzeug, und
- Entnahme der Bezahlkarte aus der Bezahlvorrichtung (7) nach der Abbuchung des fälligen Betrages, welcher durch Prüfen des Ladezustandes des zumindest einen eingegebenen Akkumulators (2) und Berechnen des zu entrichtenden Betrages für zumindest einen geladenen Akkumulator (2) aus der Restladung des zumindest einen eingegebenen Akkumulators (2) ermittelt wird.

5. Verfahren zum Betrieb einer Vorrichtung zur Entgegennahme, zum Aufladen und zur Ausgabe von Akkumulatoren (2), insbesondere von Akkumulatoren (2) zum Betrieb von Elektrofahrzeugen, wobei die Vorrichtung umfasst:
- einen Behälter (1)
- mit zumindest einer Eingabeöffnung (8),
- mit zumindest einer Ausgabeöffnung (9)
- und mit einem Lagerbereich (4),
- wobei in dem Behälter zumindest eine die zumindest eine Eingabeöffnung (8), den Lagerbereich (4) und die zumindest eine Ausgabeöffnung (9) verbindende Transportvorrichtung (3; 5) vorgesehen ist,
- wobei weiterhin in dem Behälter (1) zumindest eine Ladevorrichtung (6) vorgesehen ist, an welche ein oder mehrere in die Vorrichtung eingeführte Akkumulatoren (2) anschließbar sind, und
- wobei an dem Behälter (1) eine Bezahlvorrichtung (7) angeordnet ist,
**dadurch gekennzeichnet, dass** das Verfahren die folgenden Verfahrensschritte umfasst:
- Transportieren des zumindest einen in eine der Eingabeöffnungen (8) der Vorrichtung eingegebenen Akkumulators (2) mittels einer ersten Transportvorrichtung (3) zur Ladevorrichtung (6),
- Anschließen des zumindest einen Akkumulators (2) an die Ladevorrichtung (6),
- Prüfen des Ladezustandes des zumindest einen Akkumulators (2),
- Berechnen des zu entrichtenden Betrages für zumindest einen geladenen Akkumulator (2) aus der Restladung des zumindest einen eingegebenen Akkumulators (2),
- Anfordern zumindest eines geladenen Akkumulators (2) aus dem Lagerbereich (4),
- Ausgeben des zumindest einen geladenen Akkumulators (2) aus einer der Ausgabeöffnungen (9),
- Ent- und/oder Aufladen des zumindest einen eingegebenen Akkumulators (2),
- wobei der Verfahrensschritt des Ent- und/oder Aufladens des zumindest einen eingegebenen Akkumulators (2) bereits während der Anforderung und Ausgabe des zumindest einen geladenen Akkumulators (2) beginnen kann, und
- Einstellen des zumindest einen eingegebenen Akkumulators (2) in den Lagerbereich (4) nach Beendigung des Ladevorgangs.
